# EUROPÄISCHE PATENTSCHRIFT

(11) **EP 3 598 593 B1**
(45) Veröffentlichungstag und Bekanntmachung des Hinweises auf die Patenterteilung: **13.04.2022**
(21) Anmeldenummer: 18184869.8
(22) Anmeldetag: 21.07.2018
(51) Int. Cl.: H02G 3/06, H02G 3/22, H02G 15/013

(54) **KABELVERSCHRAUBUNG**
CABLE CONNECTION
PRESSE-ÉTOUPE

(43) Veröffentlichungstag der Anmeldung: 22.01.2020
(73) Patentinhaber: Lapp Engineering AG, 6330 Cham (CH)
(72) Erfinder: Dokoupil, Hynek, 71111 Waldenbuch (DE)
(74) Vertreter: Rutz & Partner

(56) Entgegenhaltungen:
- EP-A1- 1 729 120
- EP-A1- 2 975 713
- WO-A1-2011/161319
- CA-A1- 2 788 959
- GB-A- 191 424 441
- JP-A- 2006 004 720
- US-A- 5 920 035
- US-A1- 2006 042 814
- US-A1- 2009 288 877
- US-B2- 8 485 535

## Beschreibung

Die Erfindung betrifft eine Kabelverschraubung zur Durchführung eines Flachbandkabels durch eine Montageöffnung in einer Montagewand Kabelverschraubungen werden dazu genutzt, Kabel durch Wände und Gehäuse von elektrischen Schaltschränken, elektrischen Geräten und dergleichen hindurchzuführen. Zweck der Kabelverschraubung ist die Vermeidung von Beschädigungen des Kabels im Bereich der Durchführung sowie die zug- und druckfeste Befestigung des Kabels bezüglich der Montagewand. Zudem gewährleistet die Kabelverschraubung je nach situationsbedingten Anforderungen eine staub-/gas-/flüssigkeitsdichte Durchführung des Kabels.

Aus dem Stand der Technik sind diverse Kabelverschraubungen für Kabel mit runden Querschnitten bekannt. Aus der EP0523055A1 ist eine Kabelverschraubung mit einem in einem Gehäuse angeordneten Lamellenkorb bekannt. Der Lamellenkorb ist durch eine Hutmutter, welche auf das Gehäuse aufschraubbar ist, beaufschlagbar, so dass die Lamellen des Lamellenkorbs einen Dichtring gegen ein durchgeführtes rundes Kabel pressen. Aus der EP3301770A1 ist eine Kabelverschraubung mit einem Dichteinsatz bekannt, welcher durch eine auf dem Grundkörper aufschraubbare Druckschraube beaufschlagbar ist, so dass der Dichtring sich verformt und gegen ein durchgeführtes rundes Kabel presst.

Die beiden bekannten Kabelverschraubungen erlauben es somit Kabel mit einem Kreisquerschnitt dicht abschliessen zu halten. Einwirkende Kräfte von Dichtungselementen wirken radial auf das gehaltene Kabel ein und können dieses nicht deformieren. Für Kabel mit anderen Querschnitten, insbesondere für Flachbandkabel sind solche Kabelverschraubungen hingegen nicht geeignet.

Aus der EP0175236A2 ist eine Vorrichtung zur Einführung eines Flachbandkabels bekannt. Die Vorrichtung weist ein rahmenförmiges Halterungsteil und eine einfügbare, elastische Dichtung auf. Die Dichtung ist mit einer der Querschnittsform des Flachkabels entsprechenden Durchgangs-Öffnung versehen. Unter Zwischenlage des Flachbandkabels sind Zugentlastungs-Bügel mit den Pfosten des Halterungsteiles verschraubbar. Die Verschraubung des durchgeführten Kabels ist arbeitsaufwändig und der Querschnitt des Flachbandkabels muss genau auf die Querschnittform der Dichtung angepasst werden. Die Vorrichtung ist insbesondere nicht für Flachbandkabel mit unterschiedlichen Eckformen geeignet.

Die US2009/0288877A1 offenbart eine wasserdichte Kabelverschraubung, die einen Gehäusestutzen mit zwei Aussengewinden aufweist. Das erste Aussengewinde dient zum Festschrauben des Gehäusestutzens an einer Durchführöffnung. Auf dem zweiten Aussengewinde ist eine Hutmutter aufschraubbar. Innerhalb des Gehäusestutzens ist ein komprimierbarer Dichtkörper angeordnet.

Aus der US5920035A ist eine hochdruckbeständige Durchführung für Unterwasserpumpen bekannt. Die Durchführung umfasst ein Gehäuse, welches an einer Durchführung befestigbar ist, und ein darin angeordnetes Dichtmittel, welches Durchführöffnungen zur Durchführung von Leitern aufweist.

Die JP2006004720A offenbart eine wasserdichte Abschlussvorrichtung für ein Flachbandkabel. Die Abschlussvorrichtung ist als Gummielement ausgestaltet.

Die US2006/042814A1 offenbart ein Dichtmittel für eine Durchführung in ein Gehäuse. Das Dichtmittel umfasst einen Grundkörper mit einer Vielzahl an Öffnungen, welche durch Schlitze miteinander verbunden sind.

Aus der GB 24441 A ist eine Kopplungsvorrichtung zur Fixierung von elektrischen Kabeln und Leitungen für Beleuchtungen bekannt.

Die US8485535B2 offenbart eine Durchführungsdichtung für Messsonden mit bandförmigem Querschnitt.

Die EP1729120A1 offenbart einen Gassensor mit einem plattenförmigen Sensorelement. Das Sensorelement ist im Inneren des Gassensors durch ein zylinderförmiges Dichtelement durchgeführt und wird durch dieses zugentlastet.

Die WO2011/161319A1 offenbart eine Mehrfachkabeldurchführung mit einem rechteckigen stabilen Rahmen. Im Rahmen ist eine Vielzahl von elastischen Durchführelementen zur Durchführung jeweils eines Kabels angeordnet.

Die CA2788959A1 offenbart eine Kabelverschraubung mit einem ersten und einem zweiten Stutzenabschnitt, welche über eine Überwurfmutter miteinander verbunden sind und einer auf dem ersten Stutzenabschnitt aufgeschraubten Hutmutter. Im Inneren der Stutzenabschnitte ist zumindest ein Dichtelement angeordnet.

Die EP2975713A1 offenbart eine Kabelverschraubung mit zwei Dichtelementen, welche über Sollbruchstellen miteinander verbunden sind.

Der Erfindung liegt daher die Aufgabe zu Grunde, eine verbesserte Kabelverschraubung zur Durchführung von Flachbandkabeln zu schaffen.

Die mit einem Dichtelement ausgerüstete Kabelverschraubung soll es erlauben, sowohl Flachbandkabel mit Ecken als auch mit abgerundeten Seiten sowie Flachbandkabel mit unterschiedlichen Abmessungen vorteilhaft, insbesondere gut abgedichtet zu installieren. Eine erfindungsgemässe Kabelverschraubung soll es dabei erlauben, unterschiedliche Flachbandkabel aufzunehmen und diese trotz der Variation der Abmessungen sicher und dicht abgeschlossen zu halten.

Die Kabelverschraubung soll zum Halten unterschiedlicher Flachbandkabel einen relativ grossen Klemmbereich aufweisen. Über das Dichtelement soll eine möglichst gleichmässige radiale und longitudinale Klemmung eines durchgeführten Flachbandkabels resultieren.

Die Kabelverschraubung soll zudem eine gute Zugentlastung des durchgeführten Flachbandkabels ermöglichen.

Die Kabelverschraubung soll zudem einfach und zuverlässig bedienbar sein und alle Anforderungen des Anwenders optimal erfüllen.

Diese Aufgabe wird mit einer Kabelverschraubung nach Anspruch 1 gelöst. Vorteilhafte Ausgestaltungen der Erfindung sind in weiteren Ansprüchen angegeben.

Die Kabelverschraubung, die zur Durchführung eines Flachbandkabels durch eine Öffnung in einer Wandung, insbesondere einer Gehäusewand eines elektrischen Geräts oder eines elektrischen Schaltschranks dient, umfasst ein Dichtelement mit einem zylinderförmigen Grundkörper, durch den zumindest annähernd in axialer Richtung ein Aufnahmekanal zur Aufnahme des durchzuführenden Flachbandkabels durchgeführt ist.

Erfindungsgemäss weist der Aufnahmekanal einen länglichen Querschnitt mit zwei längeren Kanalseiten und zwei kürzeren Kanalseiten auf, von denen die kürzeren Kanalseiten je zumindest drei Ausnehmungen aufweisen.

Die Ausnehmungen erhöhen die Anpassungsfähigkeit des Dichtelements an das durchgeführte Flachbandkabel, so dass das Dichtelement optimal gegen das durchgeführte Flachbandkabel gepresst werden kann. Durch die erhöhte Anpassungsfähigkeit können Flachbandkabel mit unterschiedlichen Eckformen und Dicken dichtend durch ein vorgegebenes Dichtelement durchgeführt werden. Das Flachbandkabel wird auf dem ganzen Umfang gleichmässig umschlossen und beaufschlagt und somit zuverlässig abgedichtet.

Erfindungsgemäß weisen die Ausnehmungen den Querschnitt von Dreiecken, halben Ellipsen, Halbkreisen, Fingern oder länglichen Rechtecken mit abgerundeten Ecken auf. Die Ausnehmungen erstrecken sich über die gesamte Länge des Aufnahmekanals entlang der Achse des Dichtelements, von einer Grundfläche des zylindrischen Grundkörpers zur anderen. Hierdurch wird eine gleichförmige Anpressung an das Flachbandkabel entlang des Dichtelements erreicht.

In einer weiteren besonders bevorzugten Ausgestaltung weist der Aufnahmekanal ohne Ausnehmungen zumindest annähernd einen ellipsenförmigen oder rechteckigen Querschnitt auf. Durch diese einfache geometrische Form ist der Aufnahmekanal einfach in das Dichtelement einformbar. Vorzugsweise weist der Aufnahmekanal ohne Ausnehmungen einen zumindest annähernd rechteckigen Querschnitt auf, wobei die Ecken des Rechtecks abgerundet sind. Dies erlaubt eine optimale Anpassung an gebräuchliche Flachbandkabel.

Das Dichtelement weist in einer besonders bevorzugten Ausgestaltung einen Aufnahmekanal mit einem Längenverhältnis der kürzeren und längeren Seiten von zumindest 1:3, bevorzugt zumindest 1:5, weiter bevorzugt von zumindest 1:7 auf.

Der Aufnahmekanal durchläuft das Dichtelement z.B. entlang einer gerade oder entlang einer Kurve. Beim Verlauf entlang einer Kurve vollzieht der Aufnahmekanal vorzugsweise eine Drehung in einem Bereich von 90° bis 360°. Der Aufnahmekanal durchläuft das Dichtelement daher vorzugsweise in der Art eines Quaders, vorzugsweise mit gerundeten Kanten, oder in der Art eines verdrehten Quaders. Dies hat den Vorteil, dass nach der Kompression des Dichtelements in der Kabelverschraubung eine besonders zuverlässige Zugentlastung resultiert.

Erfindungsgemäß weist das Dichtelement an jeder kürzeren Kanalseiten mindestens drei Ausnehmungen , die zumindest annähernd regelmässig über die kürzeren Kanalseiten und auf beiden kürzeren Kanalseiten des Aufnahmekanals zumindest annähernd spiegelsymmetrisch zueinander angeordnet sind . Dadurch wird beidseitig eine gleichmässige Abdichtung des durchgeführten Flachbandkabels erreicht. In einer besonders bevorzugten Ausgestaltung weist das Dichtelement mehrere Aufnahmekanäle zur Durchführung jeweils eines Flachbandkabels auf. Vorzugsweise weisen alle Aufnahmekanäle jeweils zumindest zwei Ausnehmungen gemäss den vorangehenden Ausgestaltungen auf. Mehrere Flachbandkabel können somit mit einer einzigen Kabelverschraubung gas- und flüssigkeitsdicht durch eine Montagewand durchgeführt werden. Die Aufnahmekanäle weisen identische oder unterschiedliche Durchmesser und Formen auf, so dass Flachbandkabel mit unterschiedlichen Querschnitten durchführbar sind.

In einer besonders bevorzugten Ausgestaltung weist das Dichtelement zumindest einen weiteren Aufnahmekanal mit einem zumindest annähernd kreisrunden Querschnitt, zur Durchführung eines Rundleiters auf. Dies ermöglicht die gleichzeitige Durchführung eines Flachband- und eines Rundkabels durch eine einzige Öffnung.

Das Dichtelement ist vorzugsweise aus Silikon, Kautschuk, Gummi, einem Elastomermaterial, einem thermoplastischen Elastomermaterial oder einem elastischen Kunststoffmaterial gefertigt. Durch die Elastizität des Materials wird eine optimale Anpassung an das durchgeführte Flachbandkabel gewährleistet.

Vorzugsweise ist das Dichtelement durch Spritzgiessen gefertigt. Der zumindest eine Aufnahmekanal mit den Ausnehmungen wird vorzugsweise durch Stanzen oder Ausschneiden, insbesondere durch Wasserstrahlschneiden, aus dem Dichtelement ausgeformt. Ein entlang einer Kurve verlaufender Aufnahmekanal kann z.B. mittels der genannten Verfahren ausgeschnitten werden, indem das Dichtelement zuvor um den entsprechenden Winkel um seine Längsachse verdreht wird.

In einer bevorzugten Ausgestaltung sind im Stutzenkanal mehrere erfindungsgemässe Dichtelemente angeordnet, wobei diese vorzugweise in axialer Richtung so ausgerichtet sind, dass die Aufnahmekanäle zumindest annähernd koaxial ausgerichtet sind.

Vorzugsweise ist die erfindungsgemässe Kabelverschraubung mit dem durchgeführten Flachbandkabel staub- und flüssigkeitsdicht, besonders bevorzugt wird ein Schutzlevel von IP68 gemäss EN 60529 erreicht.

In einer nicht beanspruchten Ausgestaltung ist die Kabelverschraubung durch Austausch des Dichtelements sowohl für Flachbandkabel als auch für Rundleiter geeignet.

In einer weiteren besonders bevorzugten Ausgestaltung ist das Dichtelement durch die Hutmutter, gegebenenfalls über einen zwischen Hutmutter und Dichtelement angeordneten Lammellenkorb, beaufschlagbar. Die Beaufschlagung kann durch Anziehen der Hutmutter so angepasst werden, dass das Dichtelement so elastisch zusammengepresst wird, dass es eng am Flachbandkabel anliegt.

Nachfolgend wird die Erfindung anhand von Zeichnungen näher erläutert. Dabei zeigt:
- Fig. 1a: eine erfindungsgemässe Kabelverschraubung 1 mit einem erfindungsgemässen Dichtelement 5 und einem durchgeführten Flachbandkabel 9;
- Fig. 1b: die Kabelverschraubung 1 von Fig. 1a mit einem Viertelschnitt;
- Fig. 2: die Bestandteile der Kabelverschraubung 1 von Fig. 1a;
- Fig. 3a: ein erfindungsgemässes Dichtelement 5;
- Fig. 3b: das Dichtelement 5 aus Fig. 3a in einer Schnittdarstellung;
- Fig. 4: die Kabelverschraubung 1 von Fig. 1a mit angezogener Hutmutter 2, in die ein Viertelschnitt eingefügt wurde.

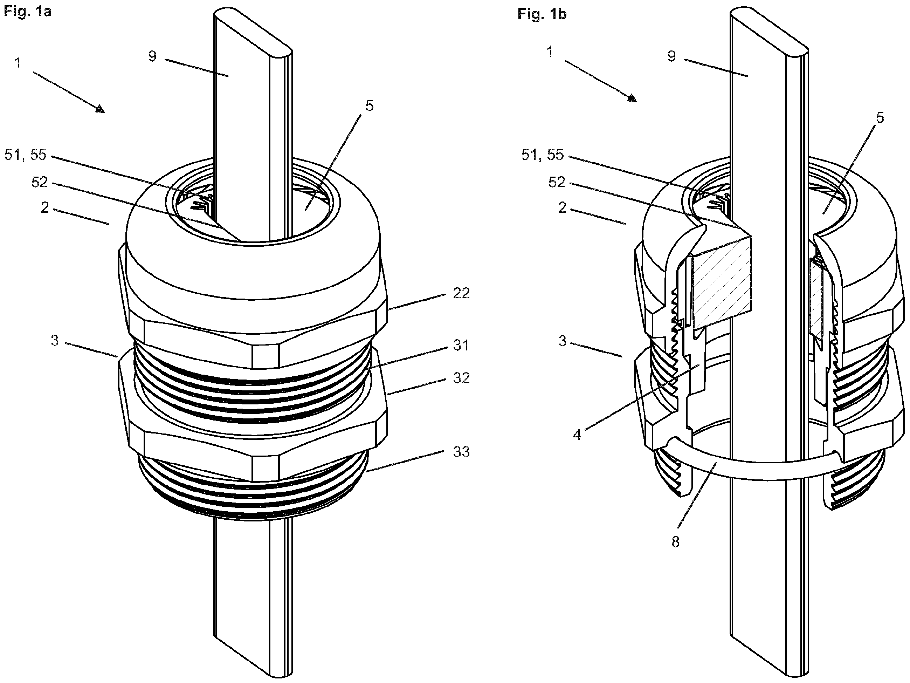

Fig. 1a zeigt eine erfindungsgemässe Kabelverschraubung 1 mit einem erfindungsgemässen Dichtelement 5 und einem durchgeführten Flachbandkabel 9. Die Kabelverschraubung 1 umfasst einen Montagestutzen 3, auf welchen über ein erstes Aussengewinde 31 eine Hutmutter 2 aufgeschraubt ist. Der Montagestutzten 3 weist ein zweites Aussengewinde 33 auf, mit welchem die Kabelverschraubung 1 in einer Montageöffnung verschraubbar ist. An einer am Montagestutzen 3 angeformten Schlüsselfläche 32 ist ein Werkzeug anlegbar, so dass die Kabelverschraubung 1 einfach anschraubbar ist. Die Hutmutter 2 weist ebenfalls eine Schlüsselfläche 22, an der ein Werkzeug anlegbar ist, auf. Mit dem Werkzeug ist die Hutmutter 2 am Montagestutzen anziehbar. Die Hutmutter umgibt teilweise ein Dichtelement 5, durch welches das Flachbandkabel 9 durchgeführt ist.

Fig. 1b zeigt die Kabelverschraubung 1 von Fig. 1a mit einem Viertelschnitt. Der Dichtungsring 8 dient zur Abdichtung der Grenzfläche zwischen Kabelverschraubung 1 und Montagewand. Im Inneren des Montagestutzens 3 ist ein Lamellenkorb 4 angeordnet, welcher durch Anziehen der Hutmutter 2 beaufschlagbar ist. Im Lamellenkorb 4 ist das Dichtelement 5 gehalten. Durch den Lamellenkorb 4 ist das Dichtelement 5 beaufschlagbar und zusammenpressbar.

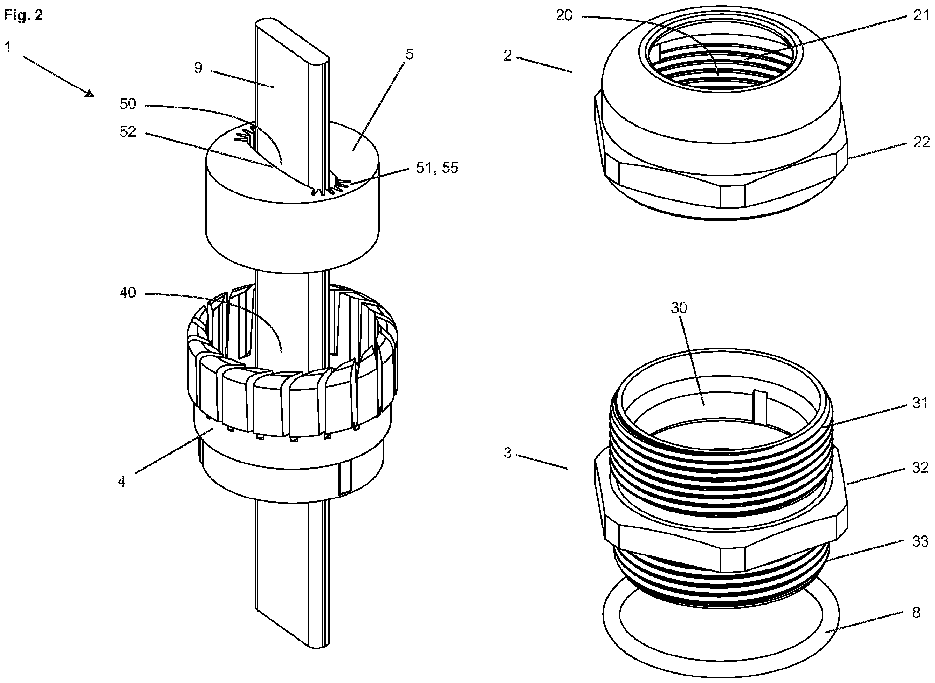

Fig. 2 zeigt die Bestandteile der Kabelverschraubung 1 von Fig. 1a. Das Dichtelement 5 weist einen Aufnahmekanal 50 zur Durchführung des Flachbandkabels 9 auf. An den kürzeren Kanalseiten 51 des Aufnahmekanals 50 sind je mehrere Ausnehmungen 55 angeformt. Das Dichtelement 5 ist im Korbkanal 40 des Lamellenkorbs 4 lagerbar. Die Hutmutter 2 weist eine Durchführungsöffnung 20 zur Durchführung des Flachbandkabels 9 auf und ist über ein Innengewinde 21 auf ein erstes Aussengewinde 31 des Montagestutzens 3 aufschraubbar.

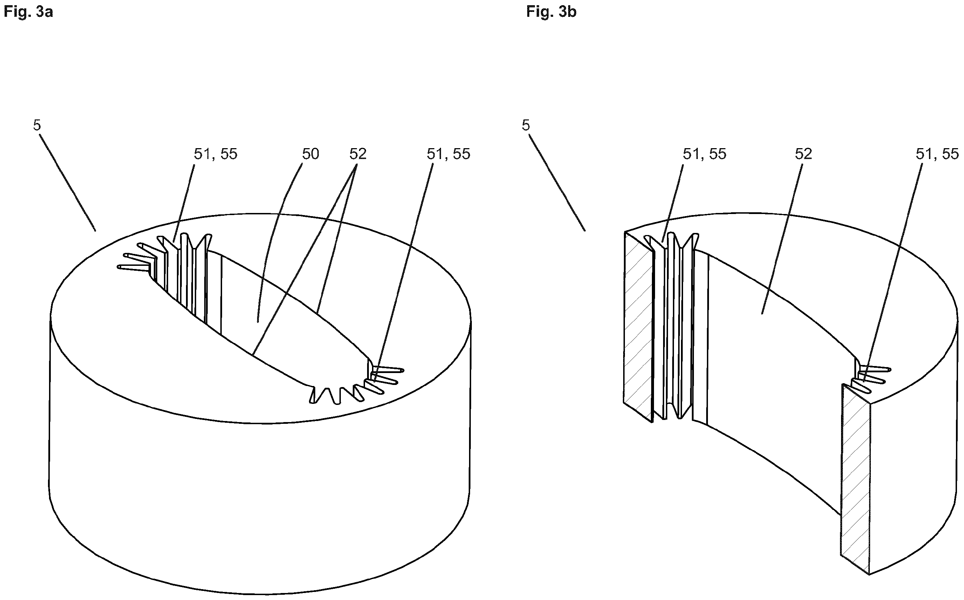

Fig. 3a zeigt ein erfindungsgemässes Dichtelement 5. Das Dichtelement 5 besteht aus einem zylindrischen Grundkörper. Rund um das Zentrum des Grundkörpers ist ein länglicher Aufnahmekanal 50 geformt. An den kürzeren Kanalseiten des Aufnahmekanals 50 sind Ausnehmungen 55 angeformt.

Fig. 3b zeigt das Dichtelement 5 aus Fig. 3a in einer Schnittdarstellung. Der Aufnahmekanal 50 und die Ausnehmungen 55 erstrecken sich von einer Seite des zylindrischen Grundkörpers zur anderen. Bei einer radialen Pressung des Dichtelements 5 werden die Ausnehmungen 55 komprimiert.

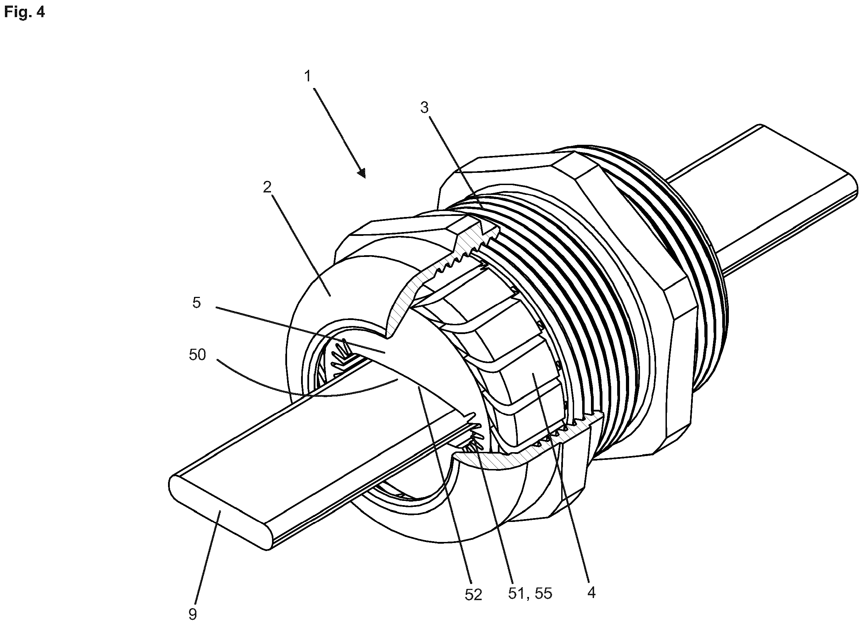

Fig. 4 zeigt die Kabelverschraubung 1 aus Fig. 1a mit angezogener Hutmutter 2. Die Hutmutter 2 ist mit einem Viertelschnitt gezeigt. Der Lamellenkorb 4 ist durch die angezogene Hutmutter 2 beaufschlagt und dadurch zusammengepresst, so dass die einzelnen Lamellen eng aneinander liegen. Hierdurch ist auch das innerhalb des Lamellenkorbs 4 angeordnete Dichtelement 5 komprimiert, so dass der Aufnahmekanal 50 eng am Flachbandkabel 9 anliegt. Die Ausnehmungen 55 sind ebenfalls zusammengepresst, so dass eine dichte Durchführung des Flachbandkabels 9 gegeben ist.

### Bezugszeichenliste

- 1: Kabelverschraubung
- 2: Hutmutter
- 20: Durchführungsöffnung
- 21: Innengewinde
- 22: Schlüsselfläche
- 3: Montagestutzen
- 30: Stutzenkanal
- 31: erstes Aussengewinde
- 32: Schlüsselfläche
- 33: zweites Aussengewinde
- 4: Lamellenkorb
- 40: Korbkanal
- 5: Dichtelement
- 50: Aufnahmekanal
- 51: kürzere Kanalseiten
- 52: längere Kanalseiten
- 55: Ausnehmungen
- 8: Dichtungsring
- 9: Flachbandkabel

## Patentansprüche

1. Kabelverschraubung (1) zur Durchführung eines Flachbandkabels (8) durch eine Öffnung in einer Montagewand, insbesondere einer Gehäusewand eines elektrischen Geräts oder eines elektrischen Schranks, mit einer Hutmutter (2) und einem Montagestutzen (3), wobei die Hutmutter (2) eine der Durchführung des Kabels dienende Durchführungsöffnung (20) aufweist und die auf den hohlzylinderförmigen Montagestutzen (3) aufsetzbar ist, und der Montagestutzen (3)
- eine Schlüsselfläche (32), zum Anlegen eines Werkzeugs,
- wenigstens ein erstes Aussengewinde (31), und
- einen Stutzenkanal (30) umfasst, in dem wenigstens ein Dichtelement (5) angeordnet ist, das einen zylinderförmigen Grundkörper aufweist, durch den zumindest annähernd in axialer Richtung ein Aufnahmekanal (50) zur Aufnahme des durchzuführenden Flachbandkabels (9) durchgeführt ist, wobei der Aufnahmekanal (50) einen länglichen Querschnitt mit zwei längeren Kanalseiten (52) und zwei kürzeren Kanalseiten (51) aufweist, **dadurch gekennzeichnet, dass** die kürzeren Kanalseiten (51) je zumindest drei Ausnehmungen (55) aufweisen, die zumindest annähernd regelmässig über die kürzere Kanalseite (51) verteilt sind und dass die Ausnehmungen (55) auf beiden kürzeren Kanalseiten (51) spiegelsymmetrisch zueinander angeordnet sind und dass die Ausnehmungen (55) den Querschnitt von Dreiecken, halben Ellipsen, Halbkreisen, Fingern oder länglichen Rechtecken mit abgerundeten Ecken aufweisen und dass die Ausnehmungen (55) entlang der Achse des Dichtelements (5) durchgehend von einer Grundfläche des zylindrischen Grundkörpers zur anderen ausgeführt sind.

2. Kabelverschraubung (1) nach Anspruch 1, **dadurch gekennzeichnet, dass** der Aufnahmekanal (50) ohne Ausnehmungen (55) zumindest annähernd einen ellipsenförmigen oder rechteckigen Querschnitt aufweist, wobei die Ecken des Rechtecks vorzugsweise abgerundet sind.

3. Kabelverschraubung (1) nach einem der Ansprüche 1 oder 2, **dadurch gekennzeichnet, dass** das Längenverhältnis zwischen den kürzeren Kanalseiten (51) und den längeren Kanalseiten (52) im Querschnitt des Aufnahmekanals (50) zumindest 1:3, bevorzugt zumindest 1:5, weiter bevorzugt zumindest 1:7 beträgt.

4. Kabelverschraubung (1) nach einem der Ansprüche 1 - 3, **dadurch gekennzeichnet, dass** das Dichtelement (5) wenigstens einen weiteren Aufnahmekanal (50) zur Durchführung wenigstens eines weiteren Flachbandkabels (9) aufweist.

5. Kabelverschraubung (1) nach einem der Ansprüche 1 - 4, **dadurch gekennzeichnet, dass** das Dichtelement (5) zumindest einen weiteren Aufnahmekanal (50) mit zumindest annähernd kreisrundem Querschnitt zur Durchführung eines Kabels mit kreisrundem Querschnitt aufweist.

6. Kabelverschraubung (1) nach einem der Ansprüche 1 - 5, **dadurch gekennzeichnet, dass** das Dichtelement (5) aus Silikon, Kautschuk, Gummi, einem Elastomermaterial, einem thermoplastischen Elastomermaterial oder einem elastischen Kunststoffmaterial gefertigt ist.

7. Kabelverschraubung (1) nach einem der Ansprüche 1 - 6, **dadurch gekennzeichnet, dass** das Dichtelement (5) durch Spritzgiessen gefertigt ist und/oder dass der zumindest eine Aufnahmekanal (50) mit den Ausnehmungen (55) durch Stanzen oder Ausschneiden, insbesondere Wasserstrahlschneiden, aus dem Dichtelement (5) ausgeformt ist.

8. Kabelverschraubung (1) nach einem der Ansprüche 1 - 7, **dadurch gekennzeichnet, dass** mehrere Dichtelemente (5) im Stutzenkanal (30) angeordnet sind, die vorzugsweise in axialer Richtung so ausgerichtet sind, dass deren Aufnahmekanäle (50) zumindest annähernd koaxial ausgerichtet sind.

9. Kabelverschraubung (1) nach einem der Ansprüche 1 - 8, **dadurch gekennzeichnet, dass** die Kabelverschraubung (1) mit dem durchgeführten Flachbandkabel (9) staub- und flüssigkeitsdicht ist, bevorzugt dass ein entsprechender Schutzlevel von IP68 gemäss EN 60529 erreicht wird.

10. Kabelverschraubung (1) nach einem der Ansprüche 1 - 9, **dadurch gekennzeichnet, dass** das Dichtelement (5) durch die Hutmutter (2) beaufschlagbar ist und/oder dass die Kabelverschraubung (1) durch Austausch des Dichtelements (5) sowohl für Flachbandkabel (9) als auch für Rundleiter geeignet ist.

11. Kabelverschraubung (1) nach einem der Ansprüche 1 - 10, **dadurch gekennzeichnet, dass** der Aufnahmekanal (50) das Dichtelement (5) entlang einer gerade oder entlang einer Kurve durchläuft und vorzugsweise eine Drehung in einem Bereich von 90° bis 360° vollzieht.

## Claims

1. Cable gland (1) for feeding a ribbon cable (8) through an opening in a mounting wall, in particular a housing wall of an electrical device or an electrical cabinet, with a cap nut (2) which has a feed-through opening (20) for feeding the cable through and which can be placed on a hollow-cylindrical mounting socket (3), with
- a wrench flat (3) for applying a tool,
- at least one first external thread (31), and
- a socket channel (30) in which at least one sealing element (5) is arranged, which has a cylindrical base body through which a receiving channel (50) for receiving the ribbon cable (9) to be fed through is passed, at least approximately in the axial direction,
the receiving channel (50) having an elongated cross section with two longer channel sides (52) and two shorter channel sides (51), **characterized in that** at least three recesses (55) are provided on each shorter channel side (51), which are distributed at least approximately regularly over the shorter channel side (51) and **in that** the recesses ( 55) are preferably arranged mirror-symmetrically to each other on both shorter channel sides (51) and that the cutouts (55) have the cross section of triangles, half ellipses, semicircles, fingers or elongated rectangles with rounded corners and that the cutouts (55) extend along the axis of the sealing element (5) continuously from one base of the cylindrical body to the other.

2. Cable gland (1) according to claim 1, **characterized in that** the receiving channel (50) has at least approximately an elliptical or rectangular cross-section without recesses (55), the corners of the rectangle preferably being rounded off.

3. Cable gland (1) according to one of claims 1 or 2, **characterized in that** the length ratio between the shorter channel sides (51) and the longer channel sides (52) in the cross section of the receiving channel (50) is at least 1:3, preferably at least 1:5. more preferably at least 1:7.

4. Cable gland (1) according to one of claims 1 - 3, **characterized in that** the sealing element (5) has at least one further receiving channel (50) for the passage of at least one further ribbon cable (9).

5. Cable gland (1) according to one of claims 1 - 4, **characterized in that** the sealing element (5) has at least one further receiving channel (50) with an at least approximately circular cross section for the passage of a cable with a circular cross section.

6. Cable gland (1) according to one of claims 1 - 5, **characterized in that** the sealing element (5) is made of silicone, caoutchouc, rubber, an elastomeric material, a thermoplastic elastomeric material or an elastic plastic material.

7. Cable gland (1) according to one of claims 1 - 6, **characterized in that** the sealing element (5) is manufactured by injection molding and/or that the at least one receiving channel (50) with the recesses (55) by punching or cutting out, in particular water jet cutting, is formed from the sealing element (5).

8. Cable gland (1) according to one of claims 1 - 7, **characterized in that** a plurality of sealing elements (5) are arranged in the connecting piece channel (30), which are preferably aligned in the axial direction in such a way that their receiving channels (50) are aligned at least approximately coaxially.

9. Cable gland (1) according to one of claims 1 - 8, **characterized in that** the cable gland (1) with the ribbon cable (9) passed through is dust and liquid-tight, preferably that a corresponding protection level of IP68 according to EN 60529 is achieved.

10. Cable gland (1) according to one of claims 1 - 9, **characterized in that** the sealing element (5) can be acted upon by the cap nut (2) and/or that the cable gland (1) can be replaced by replacing the sealing element (5) both for ribbon cables (9) and is also suitable for round conductors.

11. Cable gland (1) according to one of claims 1 - 10, **characterized in that** the receiving channel (50) runs through the sealing element (5) along a straight line or along a curve and preferably rotates in a range from 90° to 360°.

## Revendications

1. Presse-étoupe (1) pour faire passer un câble plat (8) à travers une ouverture dans une paroi de montage, en particulier une paroi de boîtier d'un appareil électrique ou d'une armoire électrique, avec un écrou borgne (2) qui présente une ouverture de passage (20) pour faire passer le câble et qui peut être placé sur une douille de montage cylindrique creuse (3), qui présente
- un méplat (3) pour l'application d'un outil,
- au moins un premier filetage extérieur (31), et
- un canal de douille (30) dans lequel au moins un élément d'étanchéité (5) est disposé, qui présente un corps de base cylindrique à travers lequel un canal de réception (50) pour recevoir le câble plat (9) à faire passer, à moins approximativement dans la direction axiale,
le canal de réception (50) présentant une section transversale allongée avec deux côtés de canal plus longs (52) et deux côtés de canal plus courts (51), **caractérisé en ce que,** les côtés de canal plus courts (51) présentent chacun au moins trois évidements (55), qui sont répartis au moins approximativement régulièrement sur le côté de canal plus court (51) et **en ce que** les évidements (55) sont de préférence agencés en symétrie miroir l'un par rapport à l'autre sur les deux côtés de canal plus courts (51) et que les évidements (55) ont la section transversale de triangles, demi-ellipses, demi-cercles, doigts ou rectangles allongés à coins arrondis et que les évidements (55) s'étendenant le long de la l'axe de l'élément d'étanchéité (5) sont continus d'une base du corps cylindrique à l'autre.

2. Presse-étoupe (1) selon la revendication 1, **caractérisé en ce que** le canal de réception (50) présente au moins approximativement une section transversale elliptique ou rectangulaire sans évidements (55), les angles du rectangle étant de préférence arrondis.

3. Presse-étoupe (1) selon l'une des revendications 1 ou 2, **caractérisé en ce que** le rapport de longueur entre les côtés de canal plus courts (51) et les côtés de canal plus longs (52) dans la section transversale du canal de réception (50) est d'au moins 1:3, de préférence au moins 1:5, plus préférablement au moins 1:7.

4. Presse-étoupe (1) selon l'une des revendications 1 - 3, **caractérisé en ce que** l'élément d'étanchéité (5) présente au moins un autre canal de réception (50) pour le passage d'au moins un autre câble plat (9).

5. Presse-étoupe (1) selon l'une des revendications 1 - 4, **caractérisé en ce que** l'élément d'étanchéité (5) présente au moins un autre canal de réception (50) avec une section transversale au moins approximativement circulaire pour le passage d'un câble avec une section circulaire.

6. Presse-étoupe (1) selon l'une des revendications 1 - 5, **caractérisé en ce que** l'élément d'étanchéité (5) est en silicone, caoutchouc, caoutchouc, un matériau élastomère, un matériau élastomère thermoplastique ou un matériau plastique élastique.

7. Presse-étoupe (1) selon l'une des revendications 1 - 6, **caractérisé en ce que** l'élément d'étanchéité (5) est fabriqué par moulage par injection et/ou **en ce que** le au moins un canal de réception (50) avec les évidements (55) est réalisé par poinçonnage ou une découpe, en particulier une découpe au jet d'eau, est réalisée à partir de l'élément d'étanchéité (5).

8. Presse-étoupe (1) selon l'une des revendications1 - 7, **caractérisé en ce que** plusieurs éléments d'étanchéité (5) sont disposés dans le canal de pièce de raccordement (30), qui sont de préférence alignés dans la direction axiale de sorte que leurs canaux de réception (50) sont alignés au moins approximativement coaxialement.

9. Presse-étoupe (1) selon l'une des revendications 1 - 8, **caractérisé en ce que** le presse-étoupe (1) traversé par le câble plat (9) est étanche à la poussière et aux liquides, de préférence qu'un niveau de protection correspondant IP68 selon EN 60529 est atteint.

10. Presse-étoupe (1) selon l'une des revendications 1 - 9, **caractérisé en ce que** l'élément d'étanchéité (5) peut être sollicité par l'écrou borgne (2) et/ou **en ce que** le presse-étoupe (1) peut être remplacé en remplaçant le l'élément d'étanchéité (5) à la fois pour les câbles plats (9) et convient également pour les conducteurs ronds.

11. Presse-étoupe (1) selon l'une des revendications 1 - 10, **caractérisé en ce que** le canal de réception (50) traverse l'élément d'étanchéité (5) le long d'une ligne droite ou le long d'une courbe et tourne de préférence dans une plage de 90° à 360°.
